# FASCICULE DE BREVET EUROPEEN

(11) **EP 2 490 159 B1**
(45) Date de publication et mention de la délivrance du brevet: **27.12.2017**
(21) Numéro de dépôt: 12159987.2
(22) Date de dépôt: 24.07.2006
(51) Int. Cl.: G06K 19/07, G06K 19/073, G06K 19/077

(54) **Entité électronique avec moyens de communication par contact et à distance**
Elektronische Einheit mit Kommunikationsmitteln über Berührungskontakt und über Fernbedienung
Electronic entity with a means for communication by contact and remotely

(30) Priorité: 25.07.2005 FR 0507887
(43) Date de publication de la demande: 22.08.2012
(62) Demande divisionnaire de: 06778905.7
(73) Titulaire: Oberthur Technologies, 92700 Colombes (FR)
(72) Inventeur: Goyet, M. Christophe, 69004 Lyon (FR)
(74) Mandataire: Santarelli

(56) Documents cités:
- EP-A- 0 945 828
- EP-A- 1 258 831
- WO-A1-98/37526
- WO-A1-99/34326
- DE-A1- 19 908 285

## Description

L'invention concerne une entité électronique avec des moyens de communication par contact et des moyens de communication à distance, plus précisément un procédé de personnalisation de cette entité électronique.

Une entité électronique, telle que par exemple une carte à microcircuit, qui inclut en général des circuits électroniques aptes à mémoriser des informations, possède des moyens de communication avec l'extérieur, afin notamment d'échanger des informations détenues par l'entité électronique avec des dispositifs extérieurs, du type lecteur ou terminal.

Parmi les moyens de communication couramment utilisés, on distingue les moyens de communication par contact, pour lesquels un contact physique entre l'entité électronique et le terminal est une condition nécessaire de l'établissement d'une communication, et les moyens de communication à distance, grâce auxquels une communication entre l'entité électronique et un lecteur est possible sans contact physique entre ces deux éléments, avec une portée de l'ordre de quelques centimètres en général.

Certaines entités électronique regroupent d'ailleurs des moyens de communication des deux types précités, auquel cas les modes de fonctionnement "*par contact*" et "*sans contact*" peuvent être organisés selon les fonctionnalités requises de l'appareil pour chacun des modes de communication, comme cela est par exemple décrit dans les brevets US 5 206 495 et US 5 999 713.

Si l'utilisation des moyens de communication sans contact est connue pour sa praticité (du fait qu'aucun positionnement précis de l'entité électronique n'est nécessaire pour l'échange d'informations), elle a toutefois l'inconvénient d'un risque d'échange intempestif d'informations, par exemple par l'établissement d'une communication non souhaitée par l'utilisateur lors de son passage à proximité d'un lecteur. Ce problème est particulièrement sensible lorsque l'entité électronique détient des informations confidentielles, comme par exemple dans le cas d'un passeport électronique.

On a donc déjà cherché dans l'art antérieur à prendre des mesures pour éviter cet échange intempestif de données, parfois évoquées sous le vocable anglo-saxon "'a*nti-skimming*".

Dans cet ordre d'idée, il a été proposé dans la demande de brevet WO 99/16019 de disposer un interrupteur sur la face supérieure d'une carte à microcircuit pour rendre possible la réception de données par cette carte seulement après activation de l'interrupteur. L'ajout d'un tel interrupteur sur l'entité électronique pose toutefois des problèmes de réalisation et de fiabilité (par exemple en cas de flexion répétée de l'entité électronique telle que définie par la norme ISO7816) et augmente son coût de fabrication.

C'est probablement la raison pour laquelle il a été proposé dans le brevet US 6 424 029 d'utiliser un interrupteur du type capacitif, mieux adapté à la constitution générale des entités électroniques porteuses d'informations, en particulier dans le cas des cartes à microcircuit. Si cette solution réduit les difficultés qui viennent d'être évoquées, elle ne parvient pas à les éviter totalement.

En outre, les solutions qui viennent d'être rappelées manquent de souplesse et ne permettent pas notamment d'envisager une limitation de l'accès au mode de communication sans contact, par exemple par mot de passe.

La demande de brevet DE 199 08 285 décrit le chargement de données de personnalisation dans une carte à microcircuit à travers des contacts de la carte.

La demande de brevet WO 98/37526 décrit une carte multi-application dans laquelle on consulte des données de personnalisation mémorisées sur la carte afin de déterminer si une application peut y être chargée.

Dans ce contexte, on décrit ci-après un procédé conforme à la revendication 1.

La possibilité d'échanger les données par les moyens de communication à distance peut ainsi être gérée par le biais de la liaison par contact, par exemple au moyen d'un terminal.

L'échange de données concerné par l'autorisation est par exemple l'émission de certaines données au moins et/ou la réception de certaines données au moins.

L'entité électronique comprend également des moyens de mémorisation d'une information d'activation commandés par ladite instruction et des moyens pour autoriser l'échange (émission et/ou réception) desdites données à travers les moyens de communication à distance en présence de ladite information d'activation.

On peut ainsi séparer la réception de l'instruction et l'échange (par exemple l'émission) des données, par exemple sur le plan temporel.

L'entité électronique peut également comprendre de façon complémentaire des moyens pour inhiber l'échange desdites données à travers les moyens de communication à distance en l'absence de ladite information d'activation.

L'entité électronique est par exemple une carte à microcircuit conforme à la norme ISO14443 et/ou à la norme ISO7816.

Ce procédé est pratique à mettre en oeuvre et possède les avantages déjà mentionnés en termes de séparation de l'autorisation et de l'échange.

Selon un mode possible de réalisation, il peut y avoir une étape d'inhibition de l'échange desdites données à un instant déterminé.

L'instant déterminé peut correspondre à la réception d'une commande de fin de communication par les moyens de communication à distance, ce qui permet à l'instruction de n'autoriser qu'une seule communication.

L'instant déterminé peut être déterminé par une temporisation, ce qui permet de limiter la durée de l'autorisation dans le temps.

L'instant déterminé peut être atteint après réception d'un nombre prédéterminé de commandes via les moyens de communication à distance, ce qui permet de limiter les possibilités d'utilisation de l'autorisation.

L'instant déterminé peut correspondre à l'achèvement d'une étape d'initialisation de la communication.

Il s'agit par exemple d'une instruction sécurisée.

Ce procédé peut comprendre en outre une étape d'écriture d'une information de configuration représentative des conditions de modification de l'information d'activation. On peut ainsi configurer l'entité électronique en ce qui concerne les possibilités d'utiliser les moyens de communication à distance lors de la personnalisation en fonction de son utilisation ultérieure, sans que cela n'implique de modifications des circuits utilisés.

D'autres caractéristiques et avantages de l'invention apparaîtront à la lumière de la description qui suit, faits en référence aux dessins annexés dans lesquels :
- la figure 1 représente un exemple d'une entité électronique selon les enseignements de l'invention ;
- la figure 2 représente un exemple possible de constitution physique de l'entité électronique de la figure 1 ;
- la figure 3 est logigramme décrivant une première partie du fonctionnement de l'entité électronique de la figure 1 ;
- la figure 4 est logigramme illustrant une seconde partie du fonctionnement de l'entité électronique de la figure 1.

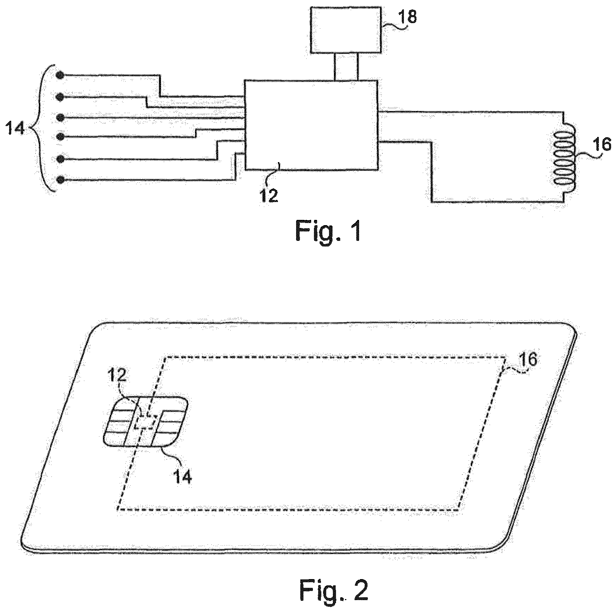

La figure 1 représente les éléments principaux d'une entité électronique: cette entité électronique comprend un microcircuit 12 (par exemple un microprocesseur) qui peut être connecté à un dispositif extérieur du type terminal au moyen de contacts 14 afin d'établir une communication du type "*par contact*" entre l'entité électronique et ce terminal.

L'entité électronique comprend également une antenne 16 connectée à chacune de ses extrémités à une borne correspondante du microcircuit 12.

L'antenne 16 fait partie de moyens de communication à distance de l'entité électronique.

Une mémoire réinscriptible 18 (par exemple une mémoire non-volatile du type mémoire effaçable et programmable électroniquement, généralement dénommée par l'acronyme anglo-saxon EEPROM) est également connectée au microcircuit 12.

On notera que, dans ce mode de réalisation, le microcircuit 12 peut être alimenté à travers la liaison par contacts (via au moins l'un des contacts 14) ou, indépendamment de cette première possibilité d'alimentation, par une télé-alimentation utilisation l'antenne magnétique 16. L'utilisation du mode de communication "*sans contact*" ne sera donc pas conditionnée par l'utilisation simultanée de la liaison par contact (à travers les contacts 14).

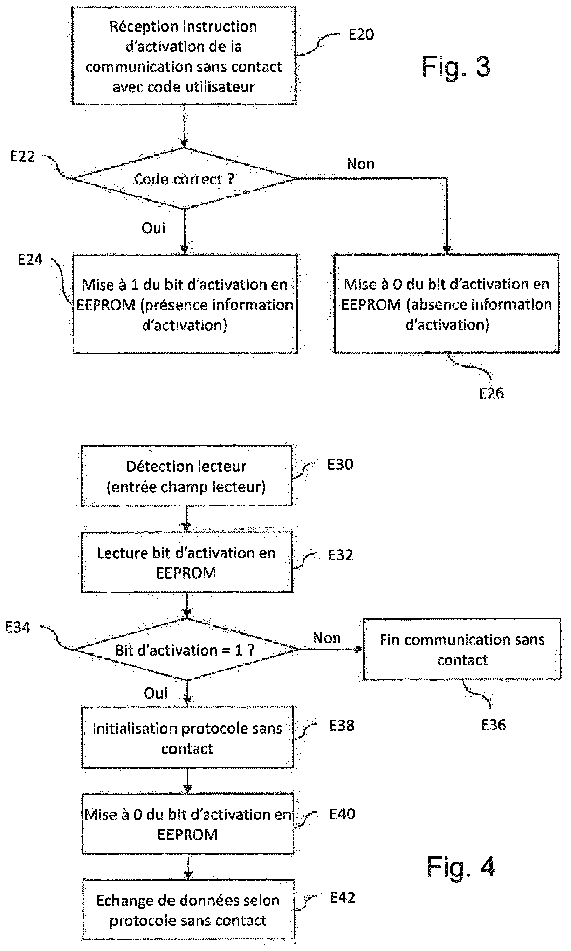

L'entité électronique pourra donc être alimentée soit par la liaison par contact, soit par télé-alimentation, ce qui donne lieu à deux modes principaux de fonctionnement décrits respectivement en figures 3 et 4 ; une alimentation simultanée par l'alimentation par contact et la télé-alimentation est naturellement possible sans remettre en cause les principes de fonctionnement des deux modes décrits ci-dessus.

Lors d'une communication de l'entité électronique avec un terminal à travers les contacts 14, le procédé illustré à la figure 3 est mis en oeuvre sous la commande du microcircuit 12 (par exemple programmé au moyen d'instructions stockés en mémoire).

Au préalable, lors d'une étape d'initialisation des données stockées dans l'entité électronique, à savoirl'étape de personnalisation utilisée dans la fabrication des cartes à microcircuit avant leur mise sur le marché, on met à 0 un bit d'activation stocké par exemple dans la mémoire réinscriptible 18, ce qui permet d'indiquer que, par défaut, une communication à distance est inhibée (comme cela sera décrit en détail plus bas).

Lors de l'étape de personnalisation, on peut également prévoir l'écriture d'une information de configuration qui indique (par exemple sous la forme de droits d'accès au fichier dans lequel est mémorisé le bit d'activation) dans quelle mesure l'utilisation des moyens de communication à distance de
l'entité électronique pourra être autorisée via la liaison par contact, à savoir par exemple :
- à tout moment, par exemple en laissant libre accès au fichier qui contient le bit d'activation (le programme de commande de l'entité électronique pouvant toutefois dans ce cas conditionner l'émission à la saisie d'un code secret comme décrit plus bas) ;
- après une authentification du lecteur (ou du porteur de la carte qui saisit éventuellement un code sur le lecteur), ce qui constitue une variante du mode de réalisation décrit ci-après pour n'autoriser l'utilisation des moyens de communication à distance qu'aux utilisateur authentifiés ;
- jamais, par exemple en interdisant l'accès au fichier qui contient le bit d'activation, ce qui rend impossible la modification de celui-ci pour autoriser éventuellement l'utilisation des moyens de communication sans contact.

On se place dans la suite dans le cas où l'accès au bit d'activation est libre vis-à-vis du programme de commande de l'entité électronique.

A un certain point du fonctionnement en mode *"contacts*" (dans lequel le microcircuit 12 est alimenté par le terminal et échange des données avec celui-ci au moyen des contacts 14), le microcircuit peut recevoir du terminal une instruction d'activation de la communication sans contact, c'est-à-dire une donnée (ou plus généralement une information) qui vise à commander l'autorisation d'une fonctionnement en mode "*sans contact*" à travers l'antenne 16, comme expliqué en référence à la figure 4 (étape E20).

Dans l'exemple décrit ici, un code fourni par l'utilisateur (par exemple au moyen d'un clavier) au terminal est transmis en association avec l'instruction d'activation de manière à ce que l'autorisation du fonctionnement en mode "*sans contact*" ne soit effective qu'en présence du bon code fourni par l'utilisateur, c'est-à-dire d'un code prédéterminé et stocké (éventuellement sous forme protégée) dans la mémoire réinscriptible 18 associée au microcircuit 12 (ou dans une autre mémoire, du type mémoire morte, associée à ce microcircuit 12).

Après avoir reçu l'instruction d'activation accompagnée du code fourni par l'utilisateur, le microcircuit 12 procède à une étape E22 de vérification de l'exactitude du code fourni, c'est-à-dire en pratique de comparaison du code fourni au code mémorisé dans l'entité électronique comme déjà mentionné.

Si le code fourni correspond bien au code secret mémorisé dans l'entité électronique, l'autorisation d'une communication sans contact devient effective par la mise à 1 à l'étape E24 du bit d'activation précédemment mentionné, ce qui signifie que l'entité électronique a effectivement reçu une information d'activation de la communication sans contact correcte.

Au contraire, si le code fourni par l'utilisateur est transmis à l'entité électronique avec l'instruction d'activation à l'étape E20 n'est pas le code mémorisé par celle-ci, on procède à l'étape E26 à la mise à 0 du bit d'activation en mémoire réinscriptible 18, ce qui signifie que l'on considère alors qu'aucune information d'activation correcte n'a été reçue.

Dans les deux cas, le bit d'activation est par exemple modifié par une instruction du type "*UPDATE BINARY*" (définie par la norme ISO7816-4) après sélection du fichier qui contient ce bit d'activation par une commande du type "*SELECT*".

On peut remarquer que, puisque le bit d'activation est mis à 0 lors de l'étape d'initialisation, l'étape E26 n'est pas nécessaire puisqu'elle ne change *a priori* pas la valeur du bit d'activation. On peut toutefois souhaiter l'utiliser, par exemple pour s'assurer que toute utilisation d'un code incorrect conduise à la mise à 0 du bit d'activation même si le code correct a été soumis à une phase précédente. Par ailleurs, en présence ou non de l'étape E26, la réception d'un code incorrect pourrait conduire à d'autres conséquences, comme par exemple l'émission d'un message d'erreur de la carte à destination du terminal via les contacts 14.

En outre, bien que dans un but de concision on ait décrit une seule étape de vérification de l'exactitude du code sans préciser s'il était possible de répéter ou non cette étape, on peut bien sûr envisager la possibilité de laisser à l'utilisateur un nombre limité de tentatives de saisie du code secret correct, avec pour conséquence par exemple le blocage de l'entité électronique lorsque le nombre limité de tentatives est épuisé et le code toujours erroné.

Le mode de fonctionnement "*sans contact*" sera à présent décrit en référence à la figure 4. Comme indiqué dans la suite, ce mode de fonctionnement est déclenché par l'entrée de l'entité électronique dans la portée d'un lecteur à distance, qu'il ait été procédé ou non au préalable aux étapes de la figure 3 visant à activer la liaison sans contact.

Lors de l'entrée de l'entité électronique dans le champ du lecteur (étape E30), l'entité électronique est téléalimentée (ce qui peut être vu comme une détection du lecteur par l'entité électronique) et le microcircuit 12 débute son fonctionnement en mode "*sans contact*".

Au début de ce fonctionnement (de préférence lors des premières étapes du programme exécuté par le microcircuit 13, par exemple lors de la mise en oeuvre des programmes d'initialisation et d'anti-collision, tels que définis dans la norme ISO14443-3), le microcircuit 12 procède à la lecture dans la mémoire réinscriptible 18 du bit d'activation (étape E32).

Il peut alors procéder à l'étape E34 à une vérification de la valeur du bit d'activation (qui, comme déjà indiqué, est indicatif d'une information d'activation de la communication sans contact).

Si le bit d'activation est à 0 (soit parce que cette valeur a été inscrite lors de l'initialisation de l'entité électronique et n'a pas été modifiée par la réception d'une instruction d'activation correcte, soit parce que ce bit a été remis à 0 suite à la saisie d'un code erroné ou à la réalisation préalable d'un échange de données autorisé sans qu'une nouvelle autorisation n'ait été fournie), on met fin à l'étape E36 à la communication sans contact, dont seules les premières étapes auront ainsi été réalisées sans que cela n'implique un échange de données.

Au contraire, s'il est vérifié par le microcircuit 12 que le bit d'activation mémorisé dans la mémoire réinscriptible 18 est à la valeur 1 (c'est-à-dire que l'on est en présence d'une information d'activation), on procède à la poursuite de la mise en oeuvre de la communication sans contact, à savoir tout d'abord à une initialisation du protocole de liaison sans contact à l'étape E38 (par exemple selon la norme ISO14443-4 afin d'arriver au niveau de l'exécution du protocole "*Half-Duplex Block Transmission Protocol*")*.*

Une fois la communication sans contact établie (par exemple après l'étape E38), on procède à la mise à 0 du bit d'activation en mémoire réinscriptible 18, comme représenté par l'étape E40 sur la figure 4. La mise en oeuvre de l'étape E40 après l'initialisation du protocole permet de s'assurer que l'entité électronique ne sera pas autorisée à établir une nouvelle communication sans contact après être sortie du champ du lecteur (sauf à recevoir une nouvelle instruction d'activation au moyen de la liaison par contact).

Toutefois, comme déjà évoqué, la mise à 0 du bit d'activation (c'est-à-dire l'inhibition de l'établissement d'une nouvelle communication sans contact) pourrait intervenir sous d'autres conditions, telles que par exemple une temporisation par rapport au moment de la réception de l'instruction d'activation (ou éventuellement par rapport à l'établissement de la liaison sans contact), l'exécution d'un nombre prédéterminé d'instructions par le microcircuit 12 (ou de commandes APDU "*Application Protocol Data Unit*") ou la réception d'un message de fin de transaction (comme c'était le cas dans le premier mode de réalisation).

Selon une autre variante, on peut envisager que le bit d'activation ne soit pas remis à 0 lors du fonctionnement en mode sans contact, mais plutôt à réception d'une instruction de désactivation en mode "*contacts*". Une telle instruction de désactivation pourrait d'ailleurs être prévue même pour le cas où le bit d'activation est remis à 0 lors du fonctionnement sans contact (comme par exemple décrit en figure 4).

Dans l'exemple décrit, une fois le protocole initialisé à l'étape E38 et bien que le bit d'activation soit remis à 0 à l'étape E40, on procède ensuite à un échange de données selon le protocole sans contact à une étape E42. On remarquera toutefois que, lorsque l'échange de données de l'étape E42 sera terminé, par exemple par la sortie de l'entité électronique du champ du lecteur, ou en variante à réception de celui-ci d'une commande mettant fin à la communication sans contact, le bit d'activation ayant été remis à 0 par l'étape E40, une nouvelle itération des étapes E30 à E34 par le retour de l'entité électronique dans le champ du lecteur conduira à un échec de la communication sans contact par le passage à l'étape E36.

Dans le mode de réalisation qui vient d'être décrit, le bit d'activation (utilisé comme indicateur de la réception préalable d'une instruction d'activation correcte) conditionne l'ensemble des échanges de données en mode sans contact. En variante, on pourrait prévoir que ce bit d'activation ne conditionne que l'échange de certaines données particulières de l'entité électronique, alors que d'autres données pourraient être librement communiquées par l'entité électronique lors de son passage près d'un lecteur à distance, même si aucune instruction spécifique n'a été reçue par la liaison par contact au préalable.

Ainsi, lorsque l'entité électronique est un document d'identification électronique, on peut prévoir que certaines données présentes sur le document (comme le nom de la personne concernée) soient communiquées sans nécessiter au préalable l'activation d'une autorisation particulière, alors que l'émission d'autres données (par exemple les informations confidentielles du types données biométriques - empreintes digitales, iris ou image faciale) ne pourront être émises par l'entité électronique via la liaison sans contact qu'à la condition que l'entité électronique ait au préalable reçu une instruction valide d'activation dans ce sens au moyen de la liaison par contact.

Dans ce cas, la présence d'une information d'activation (c'est-à-dire la valeur 1 du bit d'activation) ne conditionnera pas l'établissement de la liaison sans contact à proprement parler, mais certaines étapes d'émission des données confidentielles.

Il peut alors être prévu par exemple que l'instruction d'activation ne corresponde à l'autorisation d'émettre qu'une seule fois ces données, c'est-à-dire que le bit d'activation serait alors remis à 0 immédiatement après l'émission des données confidentielles.

Selon une variante (qui peut être éventuellement combinée avec le mode de réalisation qui vient d'être décrit), on peut prévoir que l'information d'activation conditionne la réception de données via la liaison sans contact. On peut ainsi éviter par exemple qu'un code d'identification soit présenté à l'entité électronique via la liaison sans contact par un tiers malintentionné, à l'insu du porteur autorisé de l'entité électronique, au risque par exemple de bloquer l'entité électronique suite à la présentation de plusieurs codes faux par ce tiers.

Par ailleurs, les données concernées par l'autorisation d'échange ne sont pas nécessairement limitées aux données applicatives de l'entité électronique (c'est-à-dire notamment les données portées par l'entité électronique dans sa fonction de support d'information), mais peuvent également inclure des données d'autres types, telles que des données permettant l'établissement d'un protocole de communication.

Les modes de réalisation qui viennent d'être donnés, avec les variantes envisagées, ne constituent que des exemples possibles de mise en oeuvre de l'invention qui ne s'y limite pas.

## Revendications

1. Procédé de personnalisation d'une entité électronique comprenant des moyens de communication sans contact (16) et des moyens de communication par contact (14), **caractérisé par** une étape d'écriture dans cette entité électronique d'une information d'activation destinée à conditionner l'échange de certaines données au moins à travers les moyens de communication sans contact (16) ayant une valeur inhibant un tel échange, ladite information d'activation étant apte à être modifiée à réception d'au moins une instruction d'activation à travers les moyens de communication par contact (14), lesdites données ne pouvant être échangées par les moyens de communication sans contact qu'à la condition que ladite instruction d'activation ait été reçue au moyen des moyens de communication par contact.

2. Procédé selon la revendication 1, comprenant une étape d'écriture d'une information de configuration représentative des conditions de modification de l'information d'activation.

3. Procédé selon la revendication 1 ou 2, dans lequel l'information d'activation est apte à être modifiée si un code reçu avec ladite instruction d'activation correspond à un code mémorisé dans l'entité électronique.

4. Procédé selon la revendication 3, dans lequel l'entité électronique est bloquée si le code reçu est toujours erroné après un nombre prédéterminé de tentatives.

5. Procédé selon la revendication 1 ou 2, dans lequel l'entité électronique comprend un programme de commande apte à modifier l'information d'activation si un code reçu avec ladite instruction d'activation correspond à un code mémorisé dans l'entité électronique.

6. Procédé selon la revendication 5, dans lequel le programme est apte à bloquer l'entité électronique si le code reçu est toujours erroné après un nombre prédéterminé de tentatives.

7. Procédé selon l'une des revendications 1 à 6, dans lequel l'information d'activation est apte à être modifiée après authentification d'un lecteur en communication avec l'entité électronique.

8. Procédé selon l'une des revendications 1 à 6, **caractérisé en ce que** l'entité électronique est une carte à microcircuit.

9. Procédé selon la revendication 8, dans lequel l'information d'activation est apte à être modifiée après authentification du porteur de la carte à microcircuit.

10. Procédé selon l'une des revendications 1 à 9, **caractérisé en ce que** l'information d'activation modifiée est apte à autoriser la communication sans contact.

11. Procédé selon l'une des revendications 1 à 10, **caractérisé en ce que** l'entité électronique est une carte à microcircuit conforme à la norme ISO 14443.

12. Procédé selon l'une des revendications 1 à 11, **caractérisé en ce que** l'entité électronique est une carte à microcircuit conforme à la norme ISO 7816.

## Patentansprüche

1. Verfahren zum Personalisieren einer elektronischen Einheit, die Mittel zur kontaktlosen Kommunikation (16) und Kontaktkommunikationsmittel (14) aufweist, **gekennzeichnet durch** einen Schritt des Schreibens in diese elektronische Einheit von einer Aktivierungsinformation, die dazu bestimmt ist, den Austausch bestimmter Daten mindestens durch die Mittel zur kontaktlosen Kommunikation (16) zu bedingen, die einen Wert aufweisen, der einen solchen Austausch verhindert, wobei die Aktivierungsinformation geeignet ist, beim Empfangen mindestens eines Aktivierungsbefehls über die Kontaktkommunikationsmittel (14) geändert zu werden, wobei die Daten durch die Mittel zur kontaktlosen Kommunikation nur unter der Bedingung ausgetauscht werden können, dass der Aktivierungsbefehl durch die Kontaktkommunikationsmittel empfangen worden ist.

2. Verfahren nach Anspruch 1, umfassend einen Schritt des Schreibens einer Konfigurationsinformation, die für die Änderungsbedingungen der Aktivierungsinformation repräsentativ ist.

3. Verfahren nach Anspruch 1 oder 2, wobei die Aktivierungsinformation geeignet ist, geändert zu werden, wenn ein Code, der mit dem Aktivierungsbefehl empfangen wird, einem Code entspricht, der in der elektronischen Einheit gespeichert ist.

4. Verfahren nach Anspruch 3, wobei die elektronische Einheit blockiert wird, wenn der empfangene Code nach einer vorbestimmten Anzahl von Versuchen immer falsch ist.

5. Verfahren nach Anspruch 1 oder 2, wobei die elektronische Einheit ein Steuerprogramm aufweist, das geeignet ist, die Aktivierungsinformation zu ändern, wenn ein Code, der mit dem Aktivierungsbefehl empfangen wird, einem Code entspricht, der in der elektronischen Einheit gespeichert ist.

6. Verfahren nach Anspruch 5, wobei das Programm geeignet ist, die elektronische Einheit zu blockieren, wenn der empfangene Code nach einer vorbestimmten Anzahl von Versuchen immer falsch ist.

7. Verfahren nach einem der Ansprüche 1 bis 6, wobei die Aktivierungsinformation geeignet ist, nach Authentifizierung eines Lesers, der mit der elektronischen Einheit in Kommunikation ist, geändert zu werden.

8. Verfahren nach einem der Ansprüche 1 bis 6, **dadurch gekennzeichnet, dass** die elektronische Einheit eine Mikroschaltungskarte ist.

9. Verfahren nach Anspruch 8, wobei die Aktivierungsinformation geeignet ist, nach Authentifizierung des Trägers der Mikroschaltungskarte geändert zu werden.

10. Verfahren nach einem der Ansprüche 1 bis 9, **dadurch gekennzeichnet, dass** die geänderte Aktivierungsinformation geeignet ist, die kontaktlose Kommunikation zu genehmigen.

11. Verfahren nach einem der Ansprüche 1 bis 10, **dadurch gekennzeichnet, dass** die elektronische Einheit eine Mikroschaltungskarte nach der Norm ISO 14443 ist.

12. Verfahren nach einem der Ansprüche 1 bis 11, **dadurch gekennzeichnet, dass** die elektronische Einheit eine Mikroschaltungskarte nach der Norm ISO 7816 ist.

## Claims

1. Method for personalizing an electronic entity comprising contactless communication means (16) and contact-based communication means (14), **characterized by** a step of writing to this electronic entity an activation information item intended to condition the exchange of certain data at least through the contactless communication means (16) having a value inhibiting such an exchange, the said activation information item being able to be modified on receipt of at least one activation instruction through the contact-based communication means (14), the said data being able to be exchanged by the contactless communication means only on condition that the said activation instruction has been received by means of the contact-based communication means.

2. Method according to Claim 1, comprising a step of writing a configuration information item representative of the conditions for modifying the activation information item.

3. Method according to Claim 1 or 2, in which the activation information item is able to be modified if a code received with the said activation instruction corresponds to a code stored in the electronic entity.

4. Method according to Claim 3, in which the electronic entity is blocked if the code received is still erroneous after a predetermined number of attempts.

5. Method according to Claim 1 or 2, in which the electronic entity comprises a control program able to modify the activation information item if a code received with the said activation instruction corresponds to a code stored in the electronic entity.

6. Method according to Claim 5, in which the program is able to block the electronic entity if the code received is still erroneous after a predetermined number of attempts.

7. Method according to one of Claims 1 to 6, in which the activation information item is able to be modified after authentication of a reader in communication with the electronic entity.

8. Method according to one of Claims 1 to 6, **characterized in that** the electronic entity is a microcircuit card.

9. Method according to Claim 8, in which the activation information item is able to be modified after authentication of the bearer of the microcircuit card.

10. Method according to one of Claims 1 to 9, **characterized in that** the modified activation information item is able to authorize the contactless communication.

11. Method according to one of Claims 1 to 10, **characterized in that** the electronic entity is a microcircuit card compliant with ISO standard 14443.

12. Method according to one of Claims 1 to 11, **characterized in that** the electronic entity is a microcircuit card compliant with ISO standard 7816.
